# EUROPEAN PATENT SPECIFICATION

(11) **EP 2 774 965 B1**
(45) Date of publication and mention of the grant of the patent: **20.09.2017**
(21) Application number: 14460006.1
(22) Date of filing: 22.02.2014
(51) Int. Cl.: C09K 11/02, C09K 11/08, H05B 33/10, H01J 9/22, B05B 7/14

(54) **A method of applying a photoluminescent coating and a photoluminescent material made by means of this method**
Verfahren zum Aufbringen einer photolumineszenten Beschichtung und eines photolumineszenten Materials, das nach diesem Verfahren hergestellt ist
Procédé d'application d'un revêtement photoluminescent et matériau photoluminescent fabriqué au moyen de ce procédé

(30) Priority: 04.03.2013 PL 40296913
(43) Date of publication of application: 10.09.2014
(73) Proprietor: NB LIGHT Spólka z ograniczona odpowiedzialnoscia, 61-615 Poznan (PL)
(72) Inventor: Merka, Wlodzimierz, 43-384 Jaworze (PL)
(74) Representative: Piatkowska, Elzbieta

(56) References cited:
- EP-A1- 0 479 299
- GB-A- 735 436
- JP-A- H08 299 897
- US-A1- 2010 291 313

## Description

The invention relates to a method of applying a photoluminescent coating. It can particularly be used to produce photoluminescent materials in the form of a photoluminescent plate, film or tape, as well as to coat spatially shaped products in any form, the surface of which is covered with a photoluminescent coating partially or completely.

Photoluminescent products from a photoluminescent material as well as methods of making them are known in the state of the art.

For example, a photoluminescent plate is known from patent PL no. 196855, one which is used as a starting material for warning and information signs, and especially evacuation signs, and which comprises a two-sided multi-layered structure featuring a rigid base. On one side of the base is a layer of a luminophore 0.3 to 0.5 mm thick, connected with the base by a layer of adhesive and screened by thin transparent film. On the other side of the base is a self-adhesive layer covered with protective film of plastic. The plate comprises a photoluminescent layer where the photoluminescent pigment in the form of a powder is evenly distributed in the whole volume of the binder. The method of making such a photoluminescent plate is to apply a suspension containing a luminophore to transparent film, and to cover this suspension when dry with an aqueous solution of adhesive, preferably acrylic adhesive of a concentration of 50%, and to dry this at 60°C - 80°C with blowing air. A self-adhesive layer obtained in this way is secured with plastic film.

Another example of a photoluminescent product is a visual information sign known from patent PL no. 197652, consisting of a base plate, a coloured image layer and a photoluminescent layer, wherein the sign base has at least one reflective surface, preferably white, which on a secondary basis illuminates the photoluminescent layer of the sign with reflected light.

A shiny material is known from patent PL no. 200803, consisting of a matrix of plastic, rubber or glass and a luminescent material dispersed in this matrix and containing a rare earth metal constituting 4% -32.5% parts by weight in relation to the matrix, as well as of a colouring material containing titanium dioxide of a particle size below one micrometer, the amount of which is 0.005% to 3% parts by weight in relation to the matrix, wherein the colouring material retains considerable transmission of light emitted by the luminescent material. The same patent provides a method of obtaining a photoluminescent material, which is to mix the above materials by means of slight shear machines.

Patent description PL no. 173 588 makes known a method of producing a photoluminescent material, which is to apply at least one coloured layer to the surface of a base, usually a plate of milky acrylic glass, and then to apply to this layer a photoluminescent layer which is a binder carrier and a photoluminescent pigment mixed in a proportion of 0.5 : 1.0 to 1.0 : 0.5.

Patent application PL no. 350012 presents a method of producing photoluminescent visual information signs, which is to apply coloured layers to the surface of a base by means of screen printing based on a particular sign design, and to dry each layer. Afterwards, the places that are not printed over are covered with a photoluminescent layer and dried. With a transparent base, white paint is applied or a reflective screen stuck from the inner side.

Moreover, patent application PL no. 390533 discloses a method of obtaining ceramic tiles with a layer featuring photoluminescent properties. In order to provide a photoluminescent layers, this method uses a photoluminescent powder (pigment) mixed with transparent polyester resin, followed by applying a mixture prepared in this way to the base by means of screen printing.

The photoluminescent products of the state of the art referred to contain a photoluminescent material in the form of a layer obtained by mixing a binder with a photoluminescent material, and thereby surrounding grains with a thicker layer of binder and distributing them evenly throughout the thickness (pos. I), as well as making chips, dust and small crushed grains resulting from strong mixing block the light of the photoluminescent powder crystals. Such a structure of a layer means that the grains of the pigment are separated from one another by larger polymer spaces, with some grains ground to dust impairing luminescence, the principle being that larger crystals provide better luminescence. The strongest luminescence effect is achieved when photoluminescence powder grains are as close to one another as possible, surrounded by a thin layer of binder, and are not crushed by a strong shearing force of a mixer, wherein the binder does not contain water (water dispersion), since water has a considerably adverse effect on luminescence. Consisting of mixing fluorescent powder with a binder, the methods used up till now cannot provide a good concentration of grains, since, right after adding more than 34% of photoluminescent powder parts by volume to the binder, the mix obtained becomes so thick that the pigment grains are destroyed and crushed when mixed more strongly, thereby reducing the intensity of luminescence. At the same time stickiness of the mix decreases to such an extent that further processing is not possible. In general, this considerably impairs the luminescence properties of such a mix.

Moreover, a method and a device for applying a photoluminescent material to a base are known from patent description US no. 2010/0291313A1. According to this method, a single photoluminescent layer is formed out of a transparent binder layer, to the surface of which a photoluminescent powder layer is applied. The base is the concave part of the two - piece mould, which is filled with a binder in the form of a liquid thermosetting or thermoplastic material, for example silicone, epoxy resin, or even glass. The convex surface of the other part of the mould is covered with a photoluminescent powder layer which adheres to it due to electrostatic forces. As a result of the two parts of the mould being pressed against each other, the photoluminescent powder layer is forced into the surface of the liquid binder layer. With the mould heated, the binder is hardened and the photoluminescent layer seasoned. Since the photoluminescent powder layer and the binder layer are bonded by being mechanically pressed, the photoluminescent powder is undesirably ground also in the case of this known method.

The object of the invention is to provide a method of applying a photoluminescent coating that is characterised by a large intensity of luminescence. This method of applying a photoluminescent coating is characterised in that, to the least one photoluminescent layer is applied to the base, wherein particular photoluminescent layers are created by applying to the base a layer of a transparent liquid binder, and then by applying a photoluminescent powder to the binder, and afterwards by seasoning the component photoluminescent layer obtained in this way.

According to the invention, the method is characterised in that, to the base there are applied further photoluminescent layers in the same manner, wherein a photoluminescent powder is applied to the binder by means of compressed air at a pressure of 3 - 8 bars, and thin layer of the binder is applied to the last layer of the photoluminescent powder.

The method is further characterised in that the activity of applying photoluminescent layers is repeated two to four times.

The method is further characterised in that the excess of the powder is removed after each photoluminescent layer has been formed by gravitation.

The method is further characterised in that the air stream with photoluminescent powder is directed perpendicularly to the plane of the base, to which the photoluminescent coating is applied.

Unexpectedly, it turned out that photoluminescent coatings and a photoluminescent material made according to the invention have better luminescence parameters than photoluminescent powders used in this method. The method according to the invention also makes it possible to use coarse grain powders to provide a better photoluminescence effect. Applying a photoluminescent powder to a binder at an air pressure makes powder grains penetrate the binder layer better and enables grains to be evenly distributed, directed and maximally packed next to one another in the binder layer. According to the invention, the method makes it also possible to apply a photoluminescent layer to a spatial base of any shape, as well as to selectively apply a photoluminescent coating to a flat or spatially shaped base.

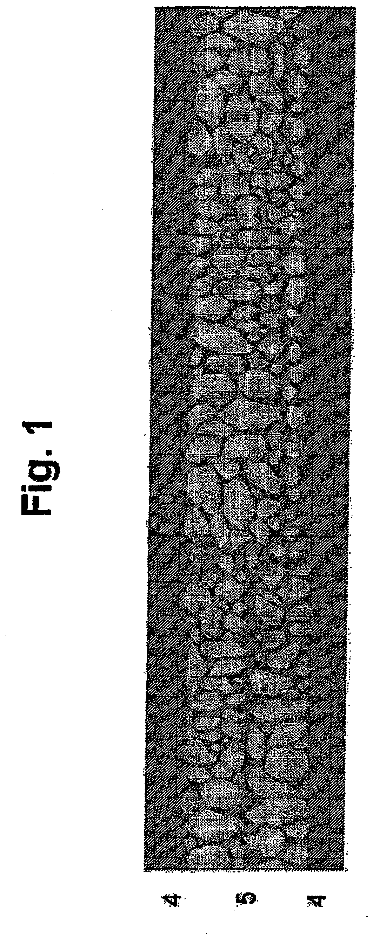

The invention was shown in the drawing to explain embodiments, where fig. 1 presents a considerably magnified section of a single photoluminescent layer, fig. 2 presents a considerably magnified section of a photoluminescent material in the form of a multilayered film with four photoluminescent layers, fig. 3 presents a considerably magnified section of a photoluminescent material in the form of a film with one photoluminescent layer, and fig 4 shows a section of a photoluminescent material in the form of a photoluminescent plate.

The invention is shown as embodiments, which do not limit its scope.

### Example 1

The method of applying a photoluminescent coating to any spatially shaped product.

A pressed polycarbonate plate 3mm thick by the Yuemei company (China) (diamond type) was used.

A thermoforming technique was used to give the plate the shape of a cylindrical solid. Afterwards the base shaped in this way was placed on a rotary platform and set in rotary motion. Using a spraying technique, priming paint of the trade name Dynasylan SIVO was applied to the base and dried, and then by means of the same technique a layer 0.3 mm thick of the epoxy resin of the trade name Epidian 607 mixed with the hardener of the trade name IDA in a proportion of 2:1 was applied evenly to the whole surface. Then, using compressed air at a pressure of 3 bars, a layer of a powdered turquoise photoluminescent pigment by the L&B company, type 150, was applied. The object was left for 1h at 25°C for the resin to become partially cross-linked, and then again a layer 0.2 mm thick of epoxy resin was applied by using the spraying technique, a layer to which the photoluminescent pigment powder was applied as before. For two hours the object was left at 25°C for the resin to be cross-linked, and then a protective layer of epoxy resin was applied to the base prepared in that way by using the spraying technique, and the object was seasoned for 24h at 25°C. The coating obtained exhibited photoluminescence as indicated by the measurement results:

### Luminance measurement

Illumination according to the DIN 67500 standard for 10 min with an intensity of 1000 lux The SONOPAN L-100 meter with the PL-68 luminance attachment was used

Characteristics of the coating applied to the surface of the solid using the L&B powdered turquoise photoluminescence pigment.

| Time | Luminance mcd/m2 |
|---|---|
| 1 min. | 7829 |
| 5 min. | 1211 |
| 10 min. | 850 |
| 30 min. | 187 |
| 60 min. | 82 |
| 2h | 36 |
| 3h | 22 |
| 4h | 16 |
| 5h | 11 |
| 10h | 4 |
| 12h | 3 |

### Example 2

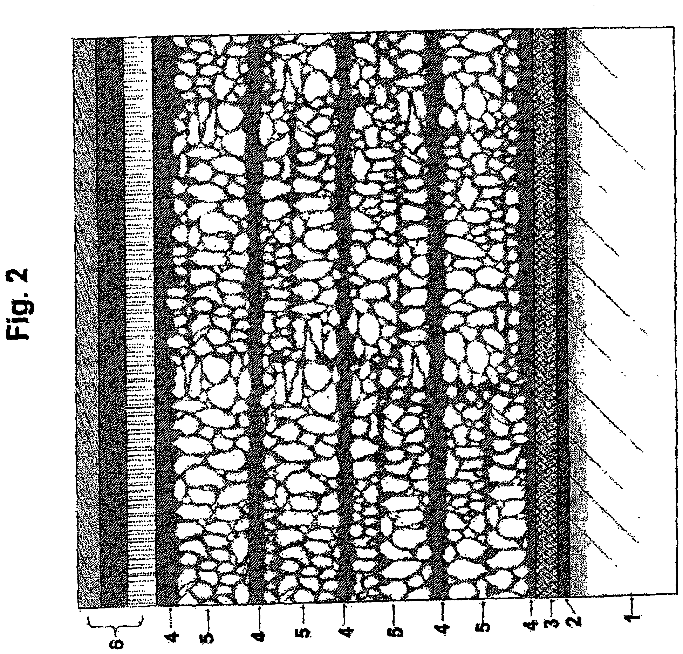

Material in the form of multilayered photoluminescent film obtained by means of the method according to the invention as shown in fig. 2.

A smooth surface of pane **1** was sprayed with permanent adhesive **2** to which transparent polyester film layer **3** 0,08 mm thick was glued. Transparent, solvent-free, two-component polyurethane resin layer **4** 0.35 mm thick, of a viscosity of 1000 mPa.s, and vacuum-vented, was applied to the base prepared in this way. Photoluminescent powder **5** was applied to this surface with compressed air at a pressure of **4** bars. The activity was carried out when base pane 1 was set in vertical position, which made the excess of photoluminescent powder **5** fall due to gravitation. In the embodiment, photoluminescent powder **5** of a grain size of 0.1 mm to 0.15 mm and a luminance intensity of 5500 mcd/m2 was used, measured after 1 minute and illuminating it with 1000 lux light flux for 10 minutes using the MHG-6BA halide lamp. When photoluminescent powder **5** had been applied, the surface was seasoned for 1h at 25-35°C for the resin to be partially cross-linked. Then, three further photoluminescent layers were applied in the same way, consisting of polyurethane resin layer **4** and photoluminescent powder **5.** Polyurethane resin layer **4** 0.3 mm thick was applied to the last layer of photoluminescent powder **5.** Afterwards, self-adhesive paper **6** was applied in such a way that its self-adhesive coating was on the top, or in other variants, white film 6 or a layer of white covering varnish 6 of a thickness of 0.1 mm was used. Next, all of it was seasoned for 48 hours to cross-link the resin at 25-35°C. After that the ready film was removed from base pane 1 and seasoned further for 7 days. Thus, four-layered photoluminescent film was obtained which exhibited a luminance of over 12000 mcd/m2 in yellow and green after 1 minute as of illuminating it with a 1000 lux halide lamp for 10 minutes according to the DIN 67500 standard, and after 1 hour still exhibited more than 250 mcd/m2, and after 14 hours still 11 mcd/m2, and after 60 hours still 2 mcd/m2, with the pigment of the trade name LanXi MinHui used, type MHG-6BA.

Below are the results of measuring luminance with the SONOPAN device:
Multi-layered photoluminescence film 1.58 mm thick; pigment used - MHG-6BA
Illumination according to the DIN 67500 standard for 10 minutes with an intensity of 1000 lux using a halide lamp.

SONOPAN L-100 meter and PL-68 luminance attachment, four photoluminescent layers with polyurethane resin and the MGH-6BA pigment with a layer of self-adhesive white paper.

| Time | Luminance mcd/m2 |
|---|---|
| 1 min. | 12110 |
| 5 min. | 2740 |
| 10 min. | 1843 |
| 30 min. | 523 |
| 60 min. | 250 |
| 2h | 120 |
| 3h | 80 |
| 5h | 51 |
| 6h | 43 |
| 7h | 35 |
| 8h | 31 |
| 12h | 17 |
| 14h | 11 |
| 17h | 9 |
| 23h | 7 |
| 32h | 4 |
| 35h | 3 |
| 49h | 2 |
| 57h | 2 |
| 60h | 2 |

The material exhibits the retention of afterglow up to 14 days in relation to sensitivity according to the norm DIN 67500 = 0.3 mcd/m2. The material exhibits large sensitivity to re-illuminating.

### Example 3

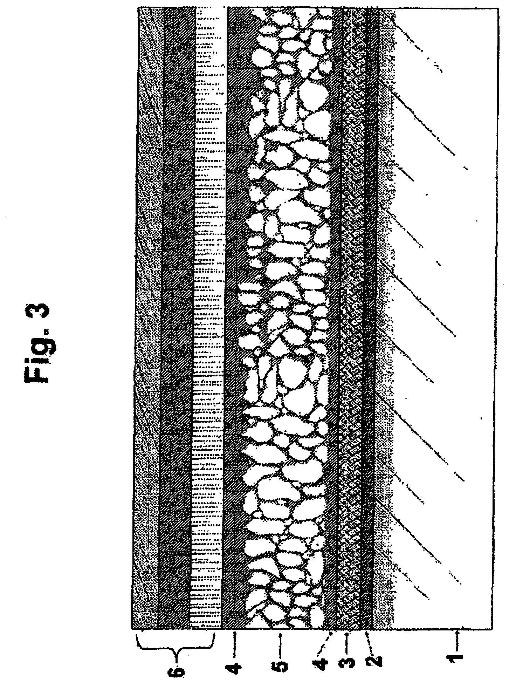

Material in the form of single-layer photoluminescent film obtained by means of the method according to the invention as shown in fig. 3.

Permanent adhesive **2** on which polyester film (PES) 3 0.08 mm thick was stuck was applied to a smooth surface of pane **1.** A layer of polyurethane resin **4** 0.2 mm thick of the trade name YUMA was applied to film **3,** not adhering to the PES film (viscosity 800 cp.s.). Then, a layer of photoluminescent powder **5** by the L&B company, type LESB, glowing blue with an intensity of 620 mcd/m2 (after 1 min. as of illuminating it for 10 minutes with an illuminance of 1000 lux) was applied to pane **1** positioned vertically by using a pressure technique with compressed air of a pressure of 4 bars. The excess of photoluminescent powder **5** fell due to gravitation, and then the surface obtained in this way was seasoned for approximately 30 minutes for the resin and the pigment grains to bind partially at 25°C. A layer of polyurethane resin **4** 0.1 mm thick was sprayed onto that surface and self-adhesive white paper **6** was stuck in such a way that the self-adhesive layer was on the top. All of it was seasoned for 4 days at 25°C to harden the resin. After that time the single-layer photoluminescent film was stripped off from the base made of polyester film **3.** In this way, the right glowing side of the single-layer film was the lower layer of polyurethane resin **4.** In view of the small amount of the pigment, the film made in this way exhibited extremely strong luminescence for the colour that had been so difficult to obtain, and thus surpassed the requirements of the DIN 67500 standard more than twice, (the standard lays down 20 mcd/m2 after 1h as against the effect obtained of 57 mcg/m2 after 1h as of illuminating).

### Luminance measurement

Illumination according to the DIN 67500 standard for 10 min at a illuminance of 1000 LUX (halide lamp).
SONOPAN L-100 meter and PL-68 luminance attachment were used
Self-adhesive photoluminescent polyurethane film glowing blue,
by the L&B company, type LBSB, , grain 40 to 100 µm

| Time | Luminance mcd/m2 |
|---|---|
| 1 min. | 822 |
| 5 min. | 384 |
| 10 min. | 282 |
| 30 min. | 115 |
| 60 min. | 57 |
| 2h | 31 |
| 3h | 20 |
| 5h | 13 |
| 6h | 11 |
| 7h | 9 |
| 8h | 7 |
| 14h | 5 |

### Example 4

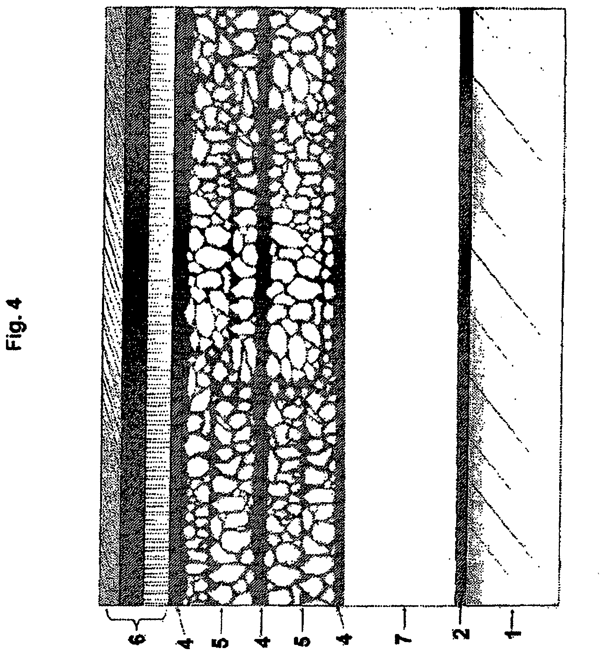

Material in the form of photoluminescent film obtained by means of the method according to the invention as shown in fig. 4.

Permanent adhesive **2** on which solid polycarbonate plate 7 3 mm thick was stuck was applied to a smooth surface of pane **1.** A layer of two-component, solvent-free polyurethane resin **4** 0.3 mm thick (viscosity 1000 cp.s) was applied to it this plate, and then a layer of photoluminescent powder 5 by the L&B company, type LESB, glowing blue with an intensity of 620 mcd/m2 (after 1 min. as of illuminating for 10 minutes with an illuminance of 1000 lux) was applied to the plate positioned vertically using a pressure technique with compressed air at a pressure of 4 bars. The excess of photoluminescent powder **5** fell due to gravitation. After approximately 60 min another layer of polyurethane resin **4** 0.12 mm thick was applied for the resin to partially bind, and again a layer of the same photoluminescent powder **5** was applied using the pressure technique. The product was seasoned for 60 min at 25°C for the resin and the pigment grains to bind. A layer 0.2 mm thick of the same polyurethane resin **4** was applied by spraying to the surface prepared in that way, and white self-adhesive paper **6** was stuck in such a way that one side of the paper adhered to the polyurethane resin and the self-adhesive layer was on the top together with the silicone protective paper. Afterwards, all of it was seasoned for 4 days in order to harden the resin at 25°C. In this way the right luminescent side of the photoluminescent plate was the lower layer of polycarbonate plate **7.** In view of the small amount of the photoluminescent powder, the plate obtained in that way exhibited extremely strong luminescence.

In the embodiments presented the grains of the photoluminescent powder in the photoluminescent layer are packed very tightly to one another, and the spaces between the photoluminescent powder particles are very small, concentrating the grains in the glowing and photoluminescent layer.

Such a concentration of a photoluminescent powder cannot be achieved in the techniques of applying a photoluminescent powder and pigments known so far. The planes of grains, the arrangement thereof and the concentration of packing are preferable for obtaining the maximum of luminance, since, as is indicated by the measurements, it surpasses the luminescence intensity achieved with the known photoluminescent materials by the PERMALIGHT company by more than 250-300%.

## Claims

1. A method of applying a photoluminescent coating, wherein at least one photoluminescent layer is applied to the base, wherein particular photoluminescent layers are created by applying to the base a layer of transparent liquid binder, and then by applying a photoluminescent powder to the binder, and afterwards by seasoning the component photoluminescent layer obtained in this way, ***characterised in that**,* to the base there are applied further photoluminescent layers in the same manner, wherein a photoluminescent powder **(5)** is applied to the binder **(4)** by means of compressed air at a pressure of 3 - 8 bars, and thin layer of the binder **(4)** is applied to the last layer of the photoluminescent powder **(5).**

2. The method according to claim 1 **characterised in that** the activity of applying photoluminescent layers is repeated two to four times.

3. The method according to claim 1 **characterised in that** the excess of the photoluminescent powder **(5)** is removed after each photoluminescent layer has been formed by gravitation.

4. The method according to claim 1, **characterised in that** the air stream with the photoluminescent powder (5) is directed perpendicularly to the plane of the base to which the photoluminescent coating is applied

## Patentansprüche

1. Verfahren zum Austragen eines Photolumineszenzüberzugs, in dem mindestens eine Photolumineszenzschicht auf eine Basis aufgetragen wird, wobei die individuelle Photolumineszenzschichte durch das auf die Basis der transparenten flüssigen Bindemittelschicht Auftragen gebildet werden, und dann auf dieses Bindemittel ein Photolumineszenzpulver aufgebracht wird, wonach die so gebildete Photolumineszenzschichtkomponente gewürzt wirt, ***dadurch gekennzeichnet, dass*** in gleicher Weise die weiteren Photolumineszenzschichte auf die Basis aufgetragen werden, wobei das Photolumineszenzpulver (5) auf das Bindemittel (4) mittels Druckluft unter Druck von 3 bis 8 Bar aufgetragen wird, und eine dünne Bindemittelschicht (4) auf die letzte Schicht des Photolumineszenzpulvers (5) aufgetragen wird.

2. Verfahren nach Anspruch 1, ***dadurch gekennzeichnet, dass*** die Aktivität des Auftragens der Photolumineszenzschichten von zwei- bis viermal wiederholt wird.

3. Verfahren nach Anspruch 1, ***dadurch gekennzeichnet, dass*** der Überschuss des Photolumineszenzpulvers (5) nach der Bildung jeder Photolumineszenzchichte durch Gravitation entfernt wird.

4. Verfahren nach Anspruch 1, ***dadurch gekennzeichnet, dass*** der Luftstrom mit Photolumineszenzpulver (5) senkrecht zur Ebene der Basis gerichtet ist, auf der der Photolumineszenzüberzug aufgetragen wird.

## Revendications

1. Le procédé d'application du revêtement photoluminescent où au moins une couche photoluminescente est appliquée sur la base où les couches photoluminescentes individuelles sont créées en voie d'application sur la base d'une couche d'un liant transparent et liquide et ensuite sur ce liant est appliqué le poudre photoluminescent où la couche composante photoluminescente ainsi créée est assaisonnée *se caratérisant en ce que* les couches photoluminescentes suivantes sont appliquées de la même façon où le poudre photoluminescent (5) est appliqué sur le liant (4) à l'aide de l'air comprimé sous pression de 3 à 8 bars et la couche fine du liant (4) est appliquée sur la dernière couche du poudre photoluminescent (5).

2. Le procédé tel que défini dans la revendication 1 *se carctérisant en ce que* l'activité d'application des couches photoluminescentes est répétée de deux à quatre fois.

3. Le procédé tel que défini dans la revendication 1 se *carctérisant en ce que* l'excès du poudre photoluminescent (5) après la création de chaque couche est éliminé par gravité.

4. Le procédé tel que défini dans la revendication 1 *se carctérisant en ce que* le flux d'air avec le poudre photoluminescent (5) est dirigé perpendiculairement vers la base sur laquelle le revêtement photoluminescent est appliqué.
